# EUROPEAN PATENT APPLICATION

(11) **EP 2 129 083 A1**
(43) Date of publication of application: **02.12.2009**
(21) Application number: 07706695.9
(22) Date of filing: 12.01.2007
(51) Int. Cl.: H04M 1/00, G06F 3/16

(54) **METHOD OF CONTROLLING VOICE RECOGNITION FUNCTION OF PORTABLE TERMINAL, AND WIRELESS COMMUNICATION SYSTEM**

(71) Applicant: Panasonic Corporation, Kadoma-shi Osaka 571-8501 (JP)
(72) Inventor: UEDA, Shinichi, Osaka 540-6207 (JP); TAKABATAKE, Masahiro, Osaka 540-6207 (JP); TAKAHASHI, Mizuho, Osaka 540-6207 (JP)
(74) Representative: Grünecker, Kinkeldey, Stockmair & Schwanhäusser Anwaltssozietät
(86) International application number: PCT/JP2007/050353
(87) International publication number: WO 2008/084556

(57) **Abstract**

A challenge to be met by the present invention is to provide a voice recognition function control method and a radiocommunications system which enable use of a portable terminal even when housings of the portable terminal are closed and which enable comfortable use of the portable terminal even when the portable terminal is held in an object distant from the body as in a bag or the like.

A portable cellular phone (10) establishes radio communication with a headset (20), and activates a voice recognition section (106) in response to a voice recognition start request from the headset (20). When housings are open, the function specified by the headset (20) is selected from four functions "Voice Dialing," "Voice Search," "Voice Setting," and "Camera Operation." Further, the voice recognition section (106) is controlled by use of a dictionary (108) where data used for achieving the selected function are stored. Meanwhile, when the housings are closed, the "Voice Dialing" function is selected. Further, the voice recognition section (106) is controlled by use of a dictionary (107) where data used for achieving the "Voice Dialing" function are stored.

## Description

### Technical Field

The present invention relates to a portable terminal voice-recognition function control method for controlling a portable terminal through voice recognition, as well as to a radiocommunications system equipped with a portable terminal having a voice-recognition function.

### Background Art

A portable terminal equipped with a voice-recognition function has heretofore been proposed. Patent Document 1 describes a technique for use with a portable terminal of a collapsible type or a flip type (a type of portable terminal having a reclosable cover for covering a key-operation section) . According to this technique, when the portable terminal is opened (hereinafter called "opening of a housing") to dial from a collapsed state or in a state where the reclosable cover is closed (hereinafter called "closing of a housing"), a voice-recognition function is automatically activated. Voice data pertaining to dialing are subjected to voice recognition. When voice recognition has been performed normally, a ban on dialing is lifted, and a specific phone number is automatically dialed.

A portable terminal which enables hands-free communication by a headset has also been proposed. After setting of "Voice-dial Automatic Dialing = active" and "Headset Dialing = active," the headset is connected to the portable terminal by way of a cable, whereby voice data from the headset are subjected to voice recognition and automatic dialing is effected.

Patent Document 1: JP-A-2000-244625

### Disclosure of the Invention

### Problem that the Invention is to solve

However, the above-described related-art portable terminal having a voice-recognition function poses the following problems.

(1) Regardless of whether the portable terminal is of a collapsible type or a flip type, the voice-recognition function is not activated unless the housing is opened. Hence, when the headset is used, the portable terminal cannot be used while held in a bag or a pocket of clothing.

(2) Since the headset and the portable terminal are connected together by way of a cable, a user can experience inconveniences caused by the cable when the portable terminal is used while being held in a pocket of clothing. However, when the portable terminal is held in an object distant from the body, as in a bag or the like, the cable poses a nuisance, to thus make the portable terminal difficult to use.

(3) When voice is erroneously recognized, auxiliary operation must be performed by use of a keypad (i.e., manual keypad operation) on the portable terminal. For instance, when "voice search" or "voice setting" is extracted after "voice dialing" has been spoken into a microphone, auxiliary operation must be performed by a keypad. When an unwanted person has been searched, auxiliary operation for canceling the searched person must be performed by the keypad. Moreover, when recognition has ended in failure; such as a case where no voice is recognized, auxiliary operation using a keypad is required. When recognition has ended in a failure, a POPUP (pop-up) screen appears in some portable terminals. In accordance with a message displayed on the screen, auxiliary operation is performed by a keypad.

The present invention has been conceived in light of the circumstances and aims at providing a portable terminal voice-recognition function control method and a radiocommunications system, which enable use of a portable terminal with a housing thereof being closed, comfortable use of the portable terminal even when the terminal is held in an object distant from the body as in a bag or the like, and a reduction in the chance of erroneous recognition of voice when the portable terminal is used with the housing thereof being closed.

### Means for Solving the Problem

The object is achieved by a method and a configuration provided below.
A portable terminal voice recognition function control method of the present invention corresponds to a portable terminal voice recognition function control method for use with a radiocommunications system including an external device having at least a microphone and a portable terminal which establishes radio communication, including issuance of a voice recognition start request, with the external device and which has at least two reclosable housings, the method comprising:
a voice recognition function activation step of causing the portable terminal to activate a voice recognition function in response to the voice recognition start request from the external device;
an open-and-close state detection step of causing the portable terminal to detect an open or closed state of the two housings; and
a function selection step of causing the portable terminal to select at least one from a plurality of predetermined functions by a voice signal from the external device by use of the voice recognition function already activated in the portable terminal in the voice recognition function activation step, in accordance with a result of detection performed in the open-and-close state detection step.

According to the method, radio communication is established between the external device and the portable terminal, and the voice recognition function of the portable terminal is activated in response to the voice recognition start request from the external device, thereby selecting at least one from the plurality of functions of the portable terminal in accordance with the open or close state of the housings. Hence, even when the housings of the portable terminal are in a closed state, the portable terminal can be used. Further, adopting radio communication obviates wiring between the headset and the portable terminal. Even when the portable terminal is held in an object distant from the body, as in a bag or the like, the portable terminal can be used comfortably without being annoyed by a nuisance of the cable.

In the portable terminal voice recognition function control method of the present invention, the function selection step is for, when a closed state of the two housings is detected in the open-and-close state detection step, reducing the number of functions selected by the portable terminal as compared with the number of functions selected when an open state of the two housings is detected.

According to the method, the number of functions that can be used when the housings are brought into a closed state is made smaller than the number of functions that can be used when the housings are brought into an open state. Therefore, the chance of erroneous recognition of voice diminishes. Specifically, the number of functions that can be selected when the housings are closed is reduced to a minimum required number, thereby reducing the possibility of erroneous recognition of voice. For instance, when the housings are in a closed state, among the functions "Voice Dialing," "Voice Search," "Voice Setting," and "Camera Operation, " only "Voice Dialing" is made available.

In the portable terminal voice recognition function control method of the present invention, the plurality of predetermined functions in the function selection step include "Voice Dialing," "Voice Search," and "Voice Setting."

According to the method, at least one can be selected from the functions "Voice Dialing," "Voice Search," and "Voice Setting" by inputting voice by way of the external device.

In the portable terminal voice recognition function control method of the present invention, radio communication established between the external device and the portable terminal is radio communication conforming to Bluetooth or WLAN.

According to the method, radio communication conforming to Bluetooth or WLAN is used. Therefore, communication between the external device and the portable terminal can be performed readily without connecting them through use of a wired connection.

In the portable terminal voice recognition function control method of the present invention, the external device is a headset having a speaker in addition to the microphone.

According to the method, a headset into which a microphone and a speaker are merged and which serves as a voice input/output device is used as the external device. Hence, conversation can be performed without using hands. In short, hands-free communication becomes feasible.

A radiocommunications system of the present invention corresponds to a radiocommunications system including an external device having at least a microphone and a portable terminal which establishes radio communication, including issuance of a voice recognition start request, with the external device and which has at least two reclosable housings, the system comprising:
a voice recognition function activation section for causing the portable terminal to activate a voice recognition function in response to the voice recognition start request from the external device;
an open-and-close state detector for causing the portable terminal to detect an open or closed state of the two housings; and
a function selector for causing the portable terminal to select at least one from a plurality of predetermined functions by a voice signal from the external device by use of the voice recognition function already activated in the portable terminal by the voice recognition function activation section, in accordance with a result of detection performed by the open-and-close state detector.

According to the above configuration, radio communication is established between the external device and the portable terminal, and the voice recognition function of the portable terminal is activated in response to the voice recognition start request from the external device, thereby selecting at least one from the plurality of functions of the portable terminal in accordance with the open or close state of the housings. Hence, even when the housings of the portable terminal are in a closed state, the portable terminal can be used. Further, adopting radio communication obviates wiring between the headset and the portable terminal. Even when the portable terminal is held in an object distant from the body, as in a bag or the like, the portable terminal can be used comfortably without being annoyed by a nuisance of the cable.

In the radiocommunications system of the present invention, when a closed state of the two housings is detected by the open-and-close state detector, the function selector reduces the number of functions selectedby the portable terminal as compared with the number of functions selected when an open state of the two housings is detected.

According to the above configuration, the number of functions that can be used when the housings of the portable terminal are brought into a closed state is made smaller than the number of functions that can be used when the housings are brought into an open state. Therefore, the chance of erroneous recognition of voice diminishes. Specifically, the number of functions that can be selected when the housings are closed is reduced to a minimum required number, thereby reducing the possibility of erroneous recognition of voice. For instance, when the housings are in a closed state, among the functions "Voice Dialing," "Voice Search, " "Voice Setting," and "Camera Operation," only "Voice Dialing" is made available.

In the radiocommunications system of the present invention, the plurality of predetermined functions of the function selector include "Voice Dialing, " "Voice Search, " and "Voice Setting."

According to the above configuration, at least one can be selected from the functions "Voice Dialing," "Voice Search," and "Voice Setting" by inputting voice by way of the external device.

In the radiocommunications system of the present invention, radio communication established between the external device and the portable terminal is radio communication conforming to Bluetooth or WLAN.

According to the above configuration, radio communication conforming to Bluetooth or WLAN is used. Therefore, communication between the external device and the portable terminal can be performed readily without connecting them through use of a wired connection.

In the radiocommunications system of the present invention, the external device is a headset having a speaker in addition to the microphone.

According to the above configuration, a headset into which a microphone and a speaker are merged and which serves as a voice input/output device is used as the external device. Hence, conversation can be performed without using hands. In short, hands-free communication becomes feasible.

A portable terminal of the present invention corresponds to a portable terminal including a portable terminal which establishes radio communication, including issuance of a voice recognition start request, with an external device having at least a microphone and which has at least two reclosable housings, the terminal comprising:
a voice recognition function activation section for activating a voice recognition function in response to the voice recognition start request from the external device;
an open-and-close state detector for detecting an open or closed state of the two housings; and
a function selector for selecting at least one from a plurality of predetermined functions by a voice signal from the external device by use of the voice recognition function already activated by the voice recognition function activation section, in accordance with a result of detection performed by the open-and-close state detector.

According to the above configuration, radio communication is established with the external device. When a voice recognition start request is issued from the external device, the voice recognition function of the portable terminal is activated in response to the voice recognition start request. The open or closed state of the housings is detected, and at least one is selected from the plurality of functions of the portable terminal in accordance with the result of detection. Hence, even when the housings of the portable terminal are in a closed state, the portable terminal can be used. Further, adopting radio communication obviates wiring between the headset and the portable terminal. Even when the portable terminal is held in an object distant from the body, as in a bag or the like, the portable terminal can be used comfortably without being annoyed by a nuisance of the cable.

The portable terminal of the present invention further comprises a voice recognition function controller for controlling the voice recognition function already activated by the voice recognition function activation section, in response to a voice signal from the external device by use of a data storage section where data used for achieving the at least one function selectedby the function selector are stored.

According to the above configuration, radio communication is established with the external device. When a voice recognition start request is issued from the external device, the voice recognition function of the portable terminal is activated in response to the voice recognition start request. The open or closed state of the housings is detected, and at least one is selected from the plurality of functions of the portable terminal in accordance with the result of detection. Moreover, the activated voice recognition function is controlled by use of the dictionary where data used for achieving the selected at least one function are stored. Hence, even when the housings of the portable terminal are in a closed state, the portable terminal can be used. Further, adopting radio communication obviates wiring between the headset and the portable terminal. Even when the portable terminal is held in an object distant from the body, as in a bag or the like, the portable terminal can be used comfortably without being annoyed by a nuisance of the cable.

In the portable terminal of the present invention, when a closed state of the two housings is detected by the open-and-close state detector, the function selector reduces the number of functions selected by the portable terminal as compared with the number of functions selected when an open state of the two housings is detected.

According to the above configuration, the number of functions that can be used when the housings are brought into a closed state is made smaller than the number of functions that can be used when the housings are brought into an open state. Therefore, the chance of erroneous recognition of voice diminishes. Specifically, the number of functions that can be selected when the housings are closed is reduced to a minimum required number, thereby reducing the possibility of erroneous recognition of voice. For instance, when the housings are in a closed state, among the functions "Voice Dialing," "Voice Search," "Voice Setting," and "Camera Operation," only "Voice Dialing" is made available.

In the portable terminal of the present invention, the plurality of predetermined functions of the function selector include "Voice Dialing," "Voice Search," and "Voice Setting."

According to the above configuration, at least one can be selected from the functions "Voice Dialing," "Voice Search," and "Voice Setting" by inputting voice by way of t he external device.

In the portable terminal of the present invention, the plurality of predetermined functions of the function selector include "Voice Dialing," "Voice Search," "Voice Setting," and "Camera Operation."

According to the above configuration, at least one can be selected from the functions "Voice Dialing," "Voice Search, " "Voice Setting, " "Camera Operation" by inputting voice by way of the external device.

In the portable terminal of the present invention, radio communication established with the external device is radio communication conforming to Bluetooth or WLAN.

According to the above configuration, radio communication conforming to Bluetooth or WLAN is used. Therefore, communication between the external device and the portable terminal can be performed readily without connecting them through use of a wired connection.

In the portable terminal of the present invention, the external device is a headset having a speaker in addition to the microphone.

According to the above configuration, a headset into which a microphone and a speaker are merged and which serves as a voice input/output device is used as the external device. Hence, conversation can be performed without using hands. In short, hands-free communication becomes feasible.

### Advantage of the Invention

A portable terminal voice-recognition function control method and a radiocommunications system of the present invention enable use of a portable terminal with a housing thereof being closed, comfortable use of the portable terminal even when the terminal is held in an object distant from the body as in a bag or the like, and a reduction in the chance of erroneous recognition of voice when the portable terminal is used with the housing thereof being closed.

### Brief Description of the Drawings

Fig. 1 is a block diagram showing the general configuration of a radiocommunications system of one embodiment of the present invention.
Fig. 2 is a view showing example data stored in a dictionary (1) of a portable cellular phone shown in Fig. 1.
Fig. 3 is a view showing example data stored in a dictionary (2) of a portable cellular phone shown in Fig. 1.
Fig. 4 is a flowchart for describing operation of the radiocommunications system shown in Fig. 1.
Fig. 5 is a view showing another example dictionary used in the portable cellular phone shown in Fig. 1.

### Descriptions of the Reference Numerals

- 1: RADIOCOMMUNICATIONS SYSTEM
- 10: PORTABLE CELLULAR PHONE
- 20: HEADSET
- 30: CELL SITE
- 101: CELLULAR RADIOCOMMUNICATIONS TRANSCEIVING SECTION
- 102: ANTENNA
- 103: BLUETOOTH RADIO TRANSCEIVING SECTION
- 104: ANTENNA
- 105: HOUSING OPEN-AND-CLOSE DETECTION SECTION
- 106: VOICE RECOGNITION SECTION
- 107: DICTIONARY (1)
- 108: DICTIONARY (2)
- 109: SPEAKER
- 110: DISPLAY SECTION
- 111: DIAL BUTTON
- 112: START BUTTON
- 113: MICROPHONE
- 114: CAMERA
- 115: PORTABLE CELLULAR PHONE CONTROL SECTION
- 120: DICTIONARY
- 201: BLUETOOTH RADIO TRANSCEIVING SECTION
- 202: ANTENNA
- 203: SPEAKER
- 204: INPUT BUTTON
- 205: MICROPHONE
- 206: HEADSET CONTROL SECTION

### Best Mode for Implementing the Invention

A preferred embodiment intended for implementing the present invention will be described in detail hereunder by reference to the drawings.

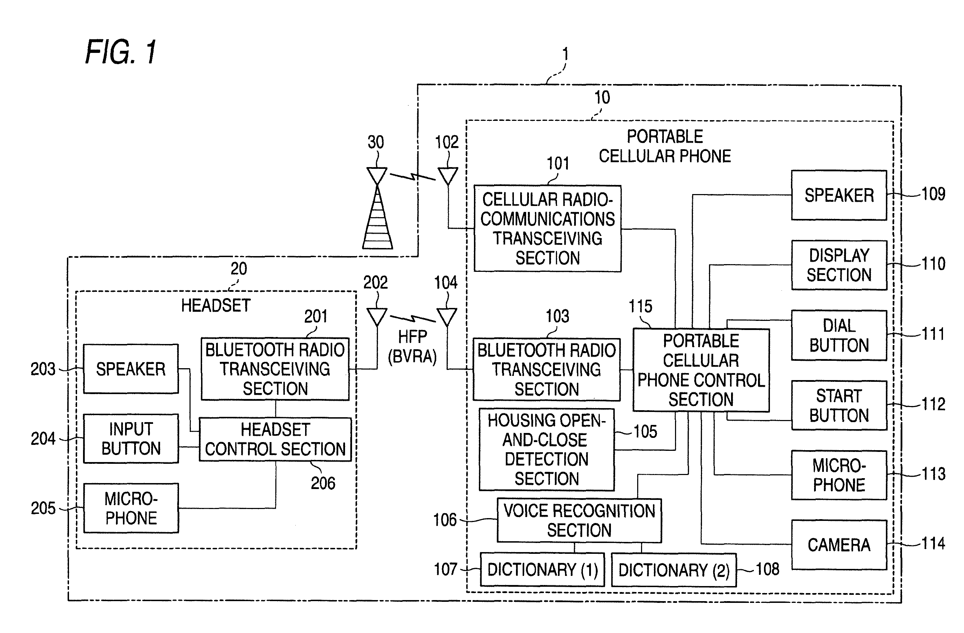

Fig. 1 is a block diagram showing the general configuration of a radiocommunications system of an embodiment of the present invention. In Fig. 1, a radiocommunications system 1 of the present embodiment comprises a portable cellular phone 10 and a headset 20, which is an external device for establishing radio communication with the portable cellular phone 10. The portable cellular phone 10 is a collapsible portable terminal having two reclosable housings. In addition to including the portable cellular phone, the portable terminal includes a PHS (Personal Handy-Phone System), a PDA (Personal Digital Assistant) having a radiocommunications function, a mobile notebook personal computer, and the like. In the present embodiment, the portable cellular phone is cited as an example portable terminal.

The portable cellular phone 10 comprises a cellular radiocommunications transceiving section 101 for establishing radio communication with another portable cellular phone (omitted from the drawings) by way of a cell site 30 of a mobile communications network; an antenna 102 connected to the cellular radiocommunications transceiving section 101; a Bluetooth radio transceiving section 103 for establishing radio communication with the headset 20 by Bluetooth; an antenna 104 connected to the Bluetooth radio transceiving section 103; a housing open-and-close detection section 105 for detecting opening and closing of the housings of the portable cellular phone 10; a voice recognition section 106 for subjecting to voice recognition a voice signal from the headset 20 received by the Bluetooth radio transceiving section 103; a dictionary (1) 107 and a dictionary (2) 108 where data used by the voice recognition section 106 are stored; a speaker 109 for outputting voice of the party at the other end from another portable cellular phone (omitted from the drawings) during broadband communication effected by the cellular radiocommunications transceiving section 101; a display section 110 for providing various displays during operation of the portable cellular phone 10; a dial button (keypad) 111 used for performing dial input operation or the like; a start button (on-hook key) 112 for starting dialing; a microphone 113 for inputting the voice of the user of the portable cellular phone 10 during broadband communication performed by the cellular radiocommunications transceiving section 101; a camera 114 for capturing an image of a subject; and a portable cellular phone control section 115 for controlling respective sections of the portable cellular phone 10.

In addition to including a manual dial input function analogous to that of a common portable cellular phone, the portable cellular phone 10 of the present embodiment has a function (Voice Dialing) for reading data set in a Voice-dial Library Name (data set as objects to be invoked for voice dialing among sets of data registered in a telephone directory) by "Voice-dial Setting" of a Telephone-Directory Setting function; a function (Voice Search) for searching a desired function from a plurality of functions provided in the portable cellular phone 10; a function (VoiceSetting) for making settings relevant to Voice Dialing; and a function (Camera Operation) for enabling operation of the camera.

The "Voice Dialing" function is equivalent to a function manually invoked by the user through operations of "Voice-dial Registration → Voice Dialing." The user speaks "Voice Dialing" into the microphone 205 of the headset 20 after startup of the voice recognition section 106 of the portable cellular phone 10, which will be described later, whereupon the portable cellular phone 10 changes to the "Voice Dialing" function. The "Voice Search" function is equivalent to a function manually invoked by the user through operations of "Menu → Stationary → Usage Guide → Voice Search." Desired functions include a "Camera function," a "Timer function," and the like. The user speaks "Voice Search" into the microphone 205 of the headset 20 in the same manner as mentioned above after activation of the voice recognition section 106, whereupon the portable cellular phone 10 changes to a "Voice Search" function.

The "Voice Setting" function is equivalent to a function manually invoked by the user by operations of "Menu → Setting → Others → Voice Setting." Functions to be set include "Voice-Dial Automatic Dialing," "Automatic Voice Dialing," and the like. The user speaks "Voice Setting" into the microphone 205 of the headset 20 in the same manner as mentioned above after activation of the voice recognition section 106, whereupon the portable cellular phone 10 changes to a "Voice Setting" function. The "Camera Operation" function is equivalent to a function manually invoked by the user through operations of "Menu → Stationary → Camera Operation." The user speaks "Camera Operation" into the microphone 205 of the headset 20 in the same manner as mentioned above after activation of the voice recognition section 106, whereupon the portable cellular phone 10 changes to a "Camera Operation" function.

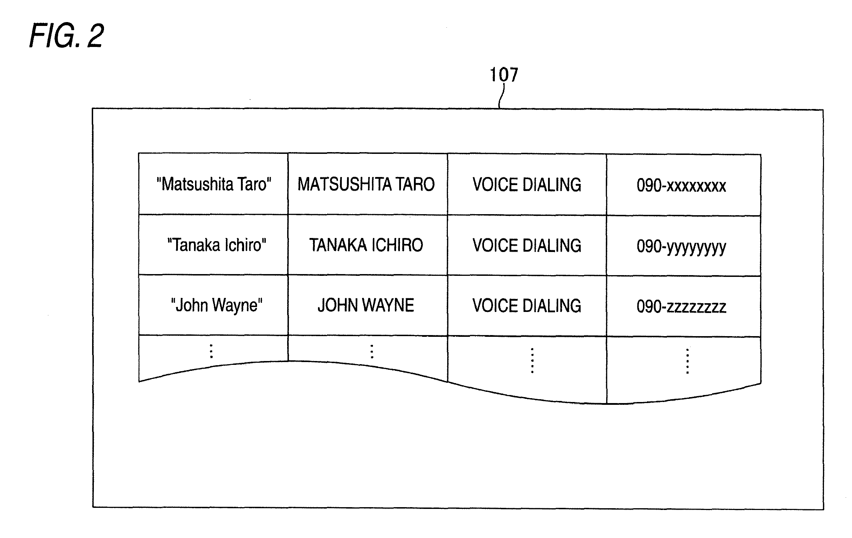

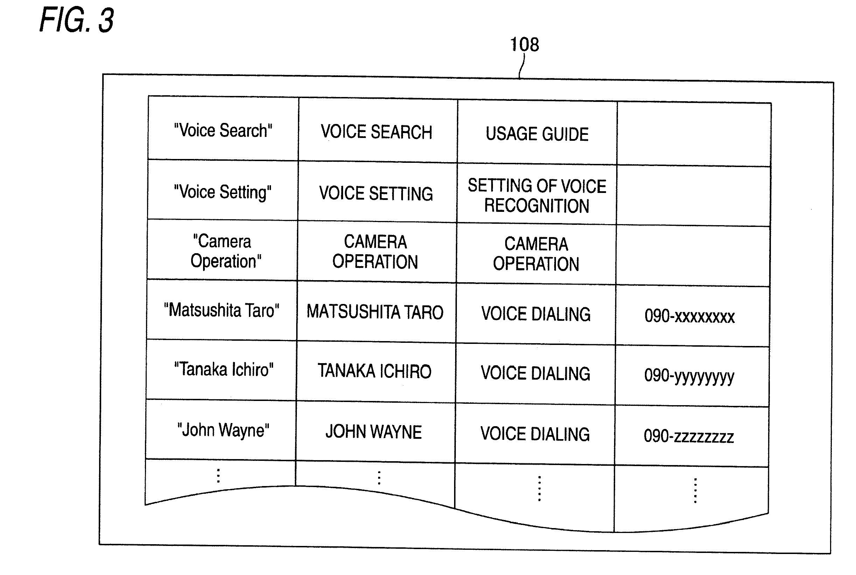

Each of the dictionary (1) 107 and the dictionary (2) 108 is formed from nonvolatile memory such as flash memory or the like. Fig. 2 is a view showing an example set of data stored in the dictionary (1) 107. The data are constituted of data pertaining to "names" and "phone numbers" of persons voice-dial-registered by way of the telephone directory of the portable cellular phone 10. Name data include both data pertaining to "phonetic Readings(in phonetic Japanese expression)" (e.g., "Matsushita Taro", "John Wayne" and the like) and data pertaining to "Display Characters" (e.g., MATSUSHITA TARO, JOHN WAYNE, and the like). Fig. 3 is a view showing example data stored in the dictionary (2) 108. In addition to including data analogous to those stored in the dictionary (1) 107, the data stored in the dictionary (2) 108 include data pertaining to "Voice Search," "Voice Setting," and "Camera Operation" functions and data pertaining to "Usage Guide, " "Setting of Voice Precognition, " and "Camera Operation" respectively assigned to the functions. Each of "Voice Search, " "Voice Setting, " and "Camera Operation" functions includes both a "phonetic reading" and a "display character".

The dictionary (1) 107 is selected when the housings of the portable cellular phone 10 are closed, and the dictionary (2) 108 is selected when the housings of the portable cellular phone 10 are opened. Specifically, when the housings of the portable cellular phone 10 are opened, all of the functions "Voice Dialing," "Voice Search," "Voice Setting," and "Camera Operation" become operative. In contrast, when the housings of the portable cellular phone 10 are closed, only the "Voice Dialing" function becomes operative.

The housing open-and-close detection section 105 detects the open and closed states of the housings of the portable cellular phone 10. Detection may also be performed mechanically or electrically. Mechanicaldetectionincludesa method using, e.g., a push button switch. In this case, the main body of a push button switch is fixed on one of two housings, and a movable portion of the push button switch is brought into contact with a remaining one of the two housings. As a result, when the housings are closed, the movable portion of the push button switch is pushed into the main body, to thus become turned on (or off). When the housings are opened, the movable portion of the push button switch is released, to thus become turned off (or on). Meanwhile, electrical detection includes a method using, e. g., a photosensor comprising a light-emitting element and a light-receiving element. In this case, the photosensor is configured such that an optical path between the light-emitting element and the light-receiving element is blocked in response to opening or closing action of the housings. As a result, when the housings are closed, an output from the light-receiving element becomes High (or Low). When the housings are opened, an output from the light-receiving element becomes Low (or High).

Upon receipt of a voice recognition start request from the headset 20 via the Bluetooth radio transceiving section 103, the portable terminal control section 115 activates the voice recognition section 106. In the present embodiment, an HFP (Hands-Free Profile) is used for communication established between the portable cellular phone 10 and the headset 20. This HFP is a profile for implementing a hands-free phone call within a vehicle or by a headset. Each of the portable cellular phone 10 and the headset 20 has the HFP. As is well known, Bluetooth is for establishing radio communication at a maximum rate of 3 Mbps between Bluetooth-equipped devices within a radius of 10 m to 100 m or thereabouts by use of a frequency band of 2.4 GHz.

The headset 20 transmits to the portable cellularphone 10 a command of AT+BVRA = "1" having the HFP at the time of issuing a request for starting voice recognition. Here, the AT+BVRA command means "Enable or Disable voice recognition in the AG (Audio Gateway) ." In short, the AT+BVRA command is for instructing whether to enable or disable voice recognition in the AG. When voice recognition is disabled (cancelled), a command of AT+BVRA = "0" is transmitted from the headset 20 to the portable cellular phone 10.

Upon receipt of, by way of the Bluetooth radio transceiving section 103, the command of AT+BVRA = "1" transmitted from the headset 20, the portable cellular phone control section 115 activates the voice recognition section 106. After activation of the voice recognition section 106, one is selected from four functions "Voice Dialing," "Voice Search," "Voice Setting," and "Camera Operation" by a voice signal from the headset 20 through use of the voice recognition function of the voice recognition section 106 in accordance with a result of detection performed by the housing open-and-close detection section 105 that detects the open and close states of the two housings. In this case, when the housings are in an open state, the portable cellular phone control section 115 selects the function input by voice by way of the headset 20 from among the four functions "Voice Dialing, " "Voice Search, " "Voice Setting," and "Camera Operation." When a voice signal specifying the "Voice Dialing" function is input, the "Voice Dialing" function is selected. When a voice signal specifying the "Voice Search" function is input, the "Voice Search" function is selected. When a voice signal specifying the "Voice Setting" function is input, the "Voice Setting" function is selected. When a voice signal specifying the "Camera Operation" function is input, the "Camera Operation" function is selected. Meanwhile, when the housings are in a closed state, the portable cellular phone control section 115 selects only the "Voice Dialing" function. Hence, only when a voice signal specifying the "Voice Dialing" function is input, the "Voice Dialing" function is selected.

When the housings are determined to be in a closed state as a result of detection performed by the housing open-and-close detection section 105, the portable cellular phone control section 115 instructs the voice recognition section 106 to use the dictionary (1) 107. When the housings are in an open state, the portable cellular phone control section 115 instructs the voice recognition section 106 to use the dictionary (2) 108. Theportable cellularphone control section 115 controls the voice recognition section 106 by use of the dictionary (1) 107 or the dictionary (2) 108. Specifically, when the housings are determined to be in an open state as a result of detection performed by the housing open-and-close detection section 105, the function invoked by the headset 20 is selected from the four functions "Voice Dialing", "Voice Search", "Voice Setting", and "Camera Operation" of the portable cellular phone, and the voice recognition section 106 is controlled by use of the dictionary (2) 108 where data used for achieving the selected function are stored. Meanwhile, when the housings are in a closed state, the "Voice Dialing" function of the portable cellular phone is selected. Further, the voice recognition section 106 is controlled by use of the dictionary (1) 107 where data used for achieving the "Voice Dialing" function are stored.

The headset 20 comprises a Bluetooth radio transceiving section 201 for establishing Bluetooth radio communication with the portable cellular phone 10; an antenna 202 connected to the Bluetooth radio transceiving section 201; a speaker 203 for outputting a voice signal transmitted from the portable cellular phone 10 through Bluetooth radio communication; an input button 204 for starting or cancelling the voice recognition function of the portable cellular phone 10; a microphone 205 for inputting the user' s voice; and a headset control section 206 for controlling respective sections of the headset 20.

Upon detection of depression of the input button 204, the headset control section 206 transmits a voice recognition start request to the portable cellular phone 10 by way of the Bluetooth radio transceiving section 201. In this case, as mentioned previously, a command of AT+BVRA = "1" having an HFP is transmitted. Moreover, upon detection of further depression of the input button 204, the headset control section 206 transmits a voice recognition completion request to the portable cellular phone 10 by way of the Bluetooth radio transceiving section 201. In this case, as mentioned previously, a command of AT+BVRA = "0" having an HFP is transmitted.

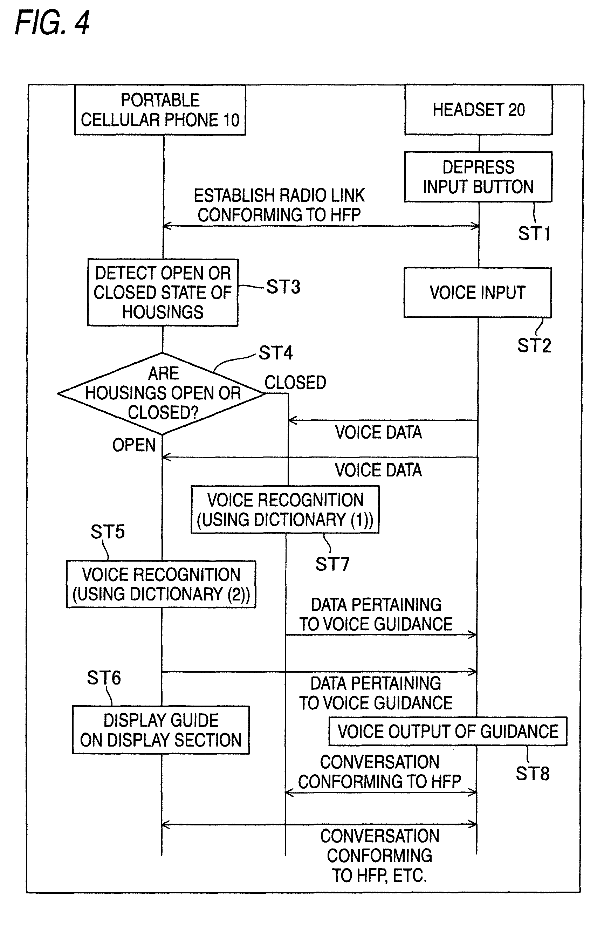

Next, operation of the radiocommunications system 1 of the present embodiment will be described by reference to a flowchart shown in Fig. 4. In Fig. 4, when the user has depressed the input button 204, the headset control section 206 in the headset 20 detects depression of the input button, and transmits a command of AT+BVRA= "1" to the portable cellular phone 10 from the Bluetooth radio transceiving section 201 (step ST1). Next, when a voice is input to the headset 20, voice data are transmitted from the Bluetooth radio transceiving section 201 to the portable cellular phone 10 (step ST2).

In the portable cellular phone 10, as a result of the command of AT+BVRA = "1" transmitted from the headset 20 being received by the Bluetooth radio transceiving section 103, the portable cellular phone control section 115 performs processing for establishing a radio link complying with the HFP with the headset 20. After the radio link complying with the HFP has been established with the headset 20, the portable cellular phone control section 115 detects the open or closed state of the housings of the portable cellular phone 10 as a result of detection performed by the housing open-and-close detection section 105 (stepST3), thereby determining whether the housings of the portable cellular phone 10 are in an open state or a closed state (step ST4). When the housings are in an open state, the function specified by the voice input from the headset 20 is selected from the four functions "Voice Dialing," "Voice Search," "Voice Setting," and "Camera Operation" by use of the dictionary (2) 108 and voice recognition is performed in connection with the selected function (step ST5). A guide (guidance) message assigned to voice recognition is displayed on the display section 110 (step ST6). Meanwhile, when the housings of the portable cellular phone 10 are in a closed state, the "Voice Dialing" function is selected by the voice input from the headset 20 by use of the dictionary (1) 107, thereby performing voice recognition in connection with the selected "Voice Dialing" function (step ST7). At this time, regardless of whether the housings of the portable cellular phone 10 are open or closed, data pertaining to the voice guidance are transmitted from the portable cellular phone 10 to the headset 20, and sound is output from the speaker 203 of the headset 20 (step ST8).

For instance, in a case where the "Voice Dialing" function has been selected, when the user speaks "Matsushita Taro" into the microphone 205 of the headset 20, the voice recognition section 106 of the portable cellular phone 10 recognizes voice. Data pertaining to a display character "MATSUSHITA TARO" assigned to "Matsushita Taro" stored in the dictionary (2) 108 or the dictionary (1) 107 are read in accordance with the status of the housing. When the housings are open, the display character is displayed on the display section 110. By the "Voice Dialing" function, a phone number (090-xxxxxxxx) of "MATSUSHITA TARO" is automatically dialed. The data pertaining to "Phone Number" read this time are transmitted as voice guidance to the headset 20, and voice is output from the speaker 203 of the headset 20.

When the user speaks "Voice Search" into the microphone 205 of the headset 20 while the housings are open, the voice recognition section 106 of the portable cellular phone 10 recognizes voice. Data pertaining to a display character "Usage Guide" assigned to "Voice Search" stored in the dictionary (2) 108 are read, and the display character is displayed on the display section 110. By the "Voice Search" function, the user performs processing for searching a desired function. A desired function includes a camera function, a timer function, or the like, as mentioned previously. The data pertaining to "Usage Guide" read this time are transmitted as voice guidance to the headset 20, and voice is output from the speaker 203 of the headset 20.

When the user speaks "Voice Setting" into the microphone 205 of the headset 20 while the housings are open, the voice recognition section 106 of the portable cellular phone 10 recognizes voice. Data pertaining to a display character "Setting of Voice Recognition" assigned to "Voice Setting" stored in the dictionary (2) 108 are read, and the display character is displayed on the display section 110. By the "Voice Setting" function, settings relevant to Voice Dialing are made. Settings relevant to Voice Dialing include voice-dial automatic dialing and automatic voice dialing, as mentioned previously. The data pertaining to "Setting of Voice Recognition" read this time are transmitted to the headset 20 as voice guidance, and voice is output from the speaker 203 of the headset 20.

When the user speaks "Camera Operation" into the microphone 205 of the headset 20 while the housings are open, the voice recognition section 106 of the portable cellular phone 10 recognizes voice. Data pertaining to a display character "Camera Operation" assigned to the phonetic reading "Camera Operation" stored in the dictionary (2) 108 are read, and the display character is displayed on the display section 110. By the "Camera Operation" function, a camera is operated. The data pertaining to "Camera Operation" read this time are transmitted to the headset 20 as voice guidance, and voice is output from the speaker 203 of the headset 20.

Subsequently, when the housings of the portable cellular phone 10 are closed, only voice communication conforming to the HFP is established between the portable cellular phone 10 and the headset 20. Specifically, when the housings are closed, only the "Voice Dialing" function is available. Therefore, voice input by way of the portable cellular phone (including a land-line phone) of the party on the other end of the line established through automatic dialing is transmitted from the portable cellular phone 10 to the headset 20. Further, the voice spoken by the user of the portable cellular phone 10 into the microphone 205 of the headset 20 is transmitted from the headset 20 to the portable cellular phone 10. Meanwhile, when the housings of the portable cellular phone 10 are open, communication other than the voice call conforming to the HFP is also established between the portable cellular phone 10 and the headset 20.

As mentioned above, according to the radiocommunications system 1 of the present embodiment, the portable cellular phone 10 establishes radio communication with the headset 20. Upon receipt of a voice recognition start request from the headset 20, the portable cellular phone activates the voice recognition section 106 in response to the request. When the housings are determined to be open as a result of detection of the open or closed state of the housings, the function specified by the headset 20 is selected from the four functions "Voice Dialing," "Voice Search," "Voice Setting," and "Camera Operation" of the portable cellular phone. Further, the voice recognition section 106 is controlled by use of the dictionary (2) 108 where the data used for achieving the selected function are stored. Meanwhile, when the housings are closed, the "Voice Dialing" function of the portable cellular phone is selected. Further, the voice recognition section 106 is controlled by use of the dictionary (1) 107 where the data used for achieving the "Voice Dialing" function are stored. As a result, even when the housings of the portable cellular phone 10 are closed, the portable cellular phone can be used. Using Bluetooth radio communication for a connection between the portable cellular phone 10 and the headset 20 obviates wiring between the portable cellular phone 10 and the headset 20. Even when the portable cellular phone 10 is housed in an obj ect distant from the body, as in a bag, a cable is not used and therefore does not pose a nuisance, and the portable cellular phone can be used comfortably.

The function that can be selected when the housings of the portable cellular phone 10 are closed is limited solely to, e.g., "Voice Dialing," so as to become smaller in number than the functions that can be selected when the housings are open (e.g., "Voice Dialing", "Voice Search", "Voice Setting", and "Camera Operation"). Accordingly, the chance of erroneous recognition of voice arising in a closed state diminishes. Namely, the number of functions that can be selected when the housings are closed is reduced to a minimum-required number, whereby the possibility of occurrence of erroneous recognition of voice can be reduced.

Moreover, the headset 20 into which the speaker 203 and the microphone 205 are integrated is used, so that conversation can be carried out without use of hands. Namely, hands-free conversation becomes feasible.

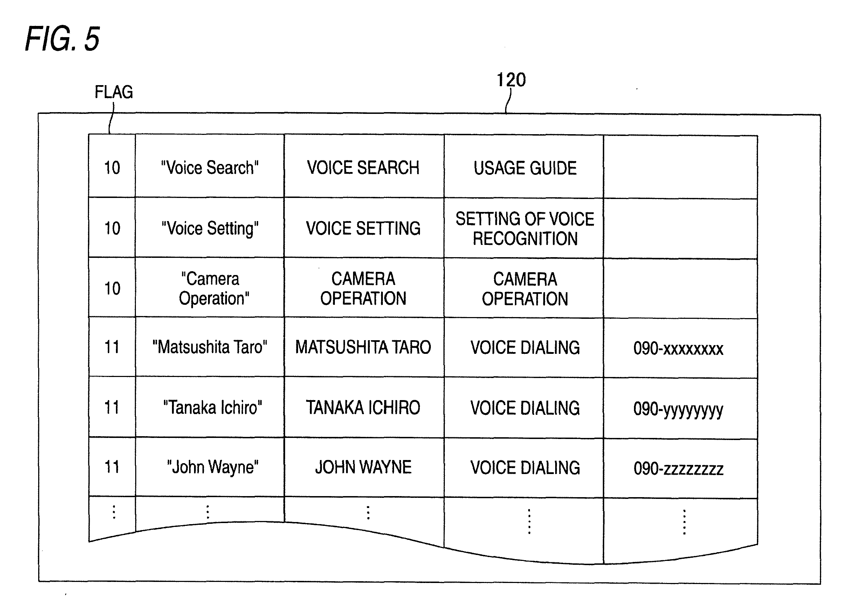

In the present embodiment, the two dictionaries; i.e., the dictionary (1) 107 and the dictionary (2) 108, are used. However, the dictionaries can also be merged into a single dictionary. Fig. 5 shows example data stored in a dictionary 120 into which contents of the dictionary (1) 107 and contents of the dictionary (2) 108 are merged. In this dictionary 120, the contents of the dictionary (1) 107 and the contents of the dictionary (2) 108 can be distinguished from each other by a flag bit FLAG. Specifically, when the housings of the portable cellular phone 10 are closed, only data specified by flag bit 11 are handled. When the housings of the portable cellular phone 10 are open, data specified both flag bits 11 and 10 are handled. As a result of merging of the two dictionaries; namely, the dictionary (1) 107 and the dictionary (2) 108, into a single dictionary, an attempt can be made to curtail cost and miniaturize the portable cellular phone 10.

In the present embodiment, the input button 204 of the headset 20 is intended for use in issuing the voice recognition start request and the voice recognition completion request. However, the input button can also be caused to double as a button for cancelling erroneous recognition of voice. For instance, a cancel request is issued by pressing the input button 204 for more than one second. By this function, even when an unwanted person has been found through a search, the user of the portable cellular phone 10 can cancel the person by pressing only the input button 204 of the headset 20 without operating a keypad.

Further, the present embodiment has not described the popup (POPUP) screen appearing when the housings of the portable cellular phone 10 are closed. However, when the housings of the portable cellular phone 10 are closed, the essential requirement is to prevent display of a popup screen and to enable the user to hear specifics of the popup screen as voice guidance by the headset 20.

In the present embodiment, when the housings are open, one is selected from the four functions "Voice Dialing", "Voice Search", "Voice Setting", and "Camera Operation". However, one function can also be selected from three functions "Voice Dialing", "Voice Search", and "Voice Setting".

The present embodiment has described Bluetooth as a protocol of radio communication established between the external device and the portable cellular phone. However, another radiocommunications protocol, such as a WLAN or the like, can also be used.

In the present embodiment, the portable cellular phone 10 is assumed to be of a collapsible type having two reclosable housings. However, the portable cellular phone 10 may also be of a slide type such as a portable terminal which is opened or closed by mutual sliding of two housings. Moreover, a portable terminal of another type may also be employed, so long as the portable terminal is of a type which includes two housings and is reclosable.

Although the present invention has been described in detail by reference to the specific embodiment, it is manifest to those who are versed in the art that various alterations or modifications can be made to the embodiment without departing from the spirit and scope of the present invention.

### Industrial Applicability

The present invention yields an advantage of the ability to use a portable terminal even when housings of the portable terminal are closed; to comfortably use the portable terminal even when the portable terminal is held in an object distant from the body, as in a bag or the like; and to diminish the chance of erroneous recognition, which would otherwise arise when the portable terminal is used with the housings closed. The present invention can be applied to a portable terminal which has a voice recognition function and is connected to an external device, such as a headset or the like, through radio communication.

## Claims

1. A portable terminal voice recognition function control method for use with a radiocommunications system including an external device having at least a microphone and a portable terminal which establishes radio communication, including issuance of a voice recognition start request, with the external device and which has at least two reclosable housings, the method comprising:
a voice recognition function activation step of causing the portable terminal to activate a voice recognition function in response to the voice recognition start request from the external device;
an open-and-close state detection step of causing the portable terminal to detect an open or closed state of the two housings; and
a function selection step of causing the portable terminal to select at least one from a plurality of predetermined functions by a voice signal from the external device by use of the voice recognition function already activated in the portable terminal in the voice recognition function activation step, in accordance with a result of detection performed in the open-and-close state detection step.

2. The portable terminal voice recognition function control method according to claim 1, wherein the function selection step is for, when a closed state of the two housings is detected in the open-and-close state detection step, reducing the number of functions selected by the portable terminal as compared with the number of functions selected when an open state of the two housings is detected.

3. The portable terminal voice recognition function control method according to claim 1 or 2, wherein the plurality of predetermined functions in the function selection step include "Voice Dialing," "Voice Search," and "Voice Setting."

4. The portable terminal voice recognition function control method according to any one of claims 1 through 3, wherein radio communication established between the external device and the portable terminal is radio communication conforming to Bluetooth or WLAN.

5. The portable terminal voice recognition function control method according to any one of claims 1 through 4, wherein the external device is a headset having a speaker in addition to the microphone.

6. A radiocommunications system including an external device having at least a microphone and a portable terminal which establishes radio communication, including issuance of a voice recognition start request, with the external device and which has at least two reclosable housings, the system comprising:
a voice recognition function activation section for causing the portable terminal to activate a voice recognition function in response to the voice recognition start request from the external device;
an open-and-close state detector for causing the portable terminal to detect an open or closed state of the two housings; and
a function selector for causing the portable terminal to select at least one from a plurality of predetermined functions by a voice signal from the external device by use of the voice recognition function already activated in the portable terminal by the voice recognition function activation section, in accordance with a result of detection performed by the open-and-close state detector.

7. The radiocommunications system according to claim 6, wherein, when a closed state of the two housings is detected by the open-and-close state detector, the function selector reduces the number of functions selectedby the portable terminal as compared with the number of functions selected when an open state of the two housings is detected.

8. The radiocommunications system according to claim 6 or 7, wherein the plurality of predetermined functions of the function selector include "Voice Dialing," "Voice Search," and "Voice Setting."

9. The radiocommunications system according to any one of claims 6 through 8, wherein radio communication established between the external device and the portable terminal is radio communication conforming to Bluetooth or WLAN.

10. The radiocommunications system according to any one of claims 6 through 9, wherein the external device is a headset having a speaker in addition to the microphone.

11. A portable terminal including a portable terminal which establishes radio communication, including issuance of a voice recognition start request, with an external device having at least a microphone and which has at least two reclosable housings, the terminal comprising:
a voice recognition function activation section for activating a voice recognition function in response to the voice recognition start request from the external device;
an open-and-close state detector for detecting an open or closed state of the two housings; and
a function selector for selecting at least one from a plurality of predetermined functions by a voice signal from the external device by use of the voice recognition function already activated by the voice recognition function activation section, in accordance with a result of detection performed by the open-and-close state detector.

12. The portable terminal according to claim 11, further comprising a voice recognition function controller for controlling the voice recognition function already activated by the voice recognition function activation section, in response to a voice signal from the external device by use of a data storage section where data used for achieving the at least one function selected by the function selector are stored.

13. The portable terminal according to claim 11 or 12, wherein, when a closed state of the two housings is detected by the open-and-close state detector, the function selector reduces the number of functions selected by the portable terminal as compared with the number of functions selected when an open state of the two housings is detected.

14. The portable terminal according to any one of claims 11 through 13, wherein the plurality of predetermined functions of the function selector include "Voice Dialing," "Voice Search," and "Voice Setting."

15. The portable terminal according to any one of claims 11 through 13, wherein the plurality of predetermined functions of the function selector include "Voice Dialing," "Voice Search," "Voice Setting," and "Camera Operation."

16. The portable terminal according to any one of claims 11 through 15, wherein radio communication established with the external device is radio communication conforming to Bluetooth or WLAN.

17. The portable terminal according to any one of claims 11 through 16, wherein the external device is a headset having a speaker in addition to the microphone.
